# EUROPÄISCHE PATENTSCHRIFT

(11) **EP 0 503 566 B1**
(45) Veröffentlichungstag und Bekanntmachung des Hinweises auf die Patenterteilung: **20.09.1995**
(21) Anmeldenummer: 92104099.4
(22) Anmeldetag: 10.03.1992
(51) Int. Cl.: F16L 59/12

(54) **Rohrisolierstück für eine Aufhängung oder Abstützung einer kälteisolierten Rohrleitung**
Pipe insulation piece for the suspension or support of a pipeline insulated against cold
Pièce d'isolation de tuyau pour la suspension ou le support d'une canalisation isolante contre le froid

(30) Priorität: 12.03.1991 DE 9102934 U
(43) Veröffentlichungstag der Anmeldung: 16.09.1992
(73) Patentinhaber: ARMSTRONG WORLD INDUSTRIES GmbH, D-48153 Münster (DE)
(72) Erfinder: Reinhard, Karl, W-7970 Leutkirch-Herlazhofen (DE)
(74) Vertreter: Finck, Dieter, Dr.Ing.

(56) Entgegenhaltungen:
- DE-U- 8 809 710
- US-A- 4 323 088
- US-A- 4 509 561
- US-A- 4 530 478
- MM-Industriejournal, Würzburg, 77(1971) 97-VT 102 bis 106

## Beschreibung

Die Erfindung betrifft ein Rohrisolierstück für eine Aufhängung oder Abstützung einer kälteisolierten Rohrleitung mit zwei Hohlzylinderhalbschalen aus flexiblem, geschlossenzelligen, thermisch isolierenden Weichschaum mit hohem Wasserdampfdiffusionswiderstand, die längs ihrer ebenen rechteckigen Wandflächen miteinander zu einem die Rohrleitung umschließenden Hohlzylinder dampfdicht verklebbar sind, mit einem dampfdicht in jede Hohlzylinderhalbschale eingesetzten Ringsegment aus druckfestem, thermisch isolierenden Hartschaum, das sich im wesentlichen von der Innenfläche zur Außenfläche des Hohlzylinders symmetrisch zu einer durch die Hohlzylinderachse gehenden Ebene erstreckt, die zu der von den rechteckigen Wandflächen jeder Hohlzylinderhalbschale gebildeten Ebene senkrecht ist, wobei die Seitenflächen und die axialen Stirnflächen jedes Ringsegments dampfdicht mit dem Weichschaum der Hohlzylinderhalbschalen verbunden sind, und mit einer Außenhaut, die mit der gesamten äußeren Umfangsfläche jeder Hohlzylinderhalbschale dampfdicht verbunden ist, wobei die Aufhängung oder Abstützung der axialen Erstreckung der Ringsegmente aus Hartschaum zugeordnet ist.

Aus der DE 88 09 710.2 U ist bereits ein gattungsgemäßes Rohrisolierstück bekannt, das von einem längs einer diametralen Trennebene in Hälften geteilten, die Rohrleitung umschließenden Hohlzylinder gebildet wird. Jede Hälfte des Hohlzylinders besteht aus zwei Halbringscheiben aus druckfestem, thermisch isolierenden Hartschaum und aus Halbringscheiben aus flexiblem, geschlossenzelligen, chemisch isolierenden Weichscham, die mit ihren Stirnflächen mit denen der jeweiligen Halbringscheiben aus druckfestem Hartschaum funktionsgerecht verbunden sind. Um jede Hälfte des Hohlzylinders ist eine die Halbringscheiben umschließende, als Dampfbremse wirkende Folie angeordnet, die an der einen Trennungsmantellinie ein Scharnier bildet und auf der gegenüberliegenden Trennungsmantellinie die andere Hälfte mit einem Befestigungsstreifen überlappt. Die als Dampfbremse wirkende Folie hat ferner stirnseitig einen axialen Überstand, so daß sie die Halbringscheiben aus Weichschaum überlappt. Als druckfester Hartschaum wird Polyurethan-Polyisocyanuratschaumstoff verwendet. Der Weichschaum hat wenigstens an der freien Stirnseite eine Schaumhaut.

Der Herstellungsaufwand für solche Rohrisolierstücke, um sie dampfdiffusionsdicht zu machen, ist sehr groß. Außerdem muß für jeden Rohrdurchmeser ein speziell angepaßtes Rohrisolierstück bereitgestellt werden.

In dem MM-Industriejournal, Würzburg, 77 (1971) 97-VT 102 bis 106, ist in Bild 9 ein Rohrisolierstück gezeigt, bei welchem das druckfeste, thermisch isolierende Material aus Holzsegmenten besteht, die von einer Dampfsperre und außenseitig von einem Blechmantel mit Ständer umschlossen sind. Die Ausbildung solcher Rohrisolierstücke ist äußerst kostenintensiv. Da das zur Erreichung der Drucksteifigkeit verwendete Holz eine höhere Wärmeleitfähigkeit aufweist als die üblichen Dämmstoffe, kommt es beim bündigen Einbau eines solchen Isolierstücks im Bereich des Auflagers sehr leicht zu Taupunktunterschreitungen und damit zur Kondenswasserabscheidung.

Im Zusammenhang mit Bild 5 dieser Literaturstelle ist es bekannt, Rohrschalen aus Polyurethanhartschaum mit einem Polyvinylchloridhartmantel als Wärmeisolierung zu verwenden, wobei die Überlappungen der Längsränder verklebt oder formschlüssig durch einen angearbeiteten Gleitverschluß verbunden werden. Für die Kältedämmung werden solche Rohrschalen in der Regel nicht eingesetzt.

In der DE 31 30 272 C2 ist ferner eine Vorrichtung zur örtlichen Festlegung einer kältegedämmten und mit einem diffusionshemmenden Schutzmantel versehenen Rohrleitung beschrieben. Dabei werden längs einer Diametralebene geteilte Lagerschalen verwendet, die aus einem druckfesten kältedämmenden Material bestehen, das eine höhere Druckfestigkeit als das verwendete Dämmaterial hat. Bevorzugt wird Hartschaumstoff. Das die übrige Rohrleitung isolierende Dämmaterial ist an die Stirnseiten des Hartschaums der Lagerschale herangeführt. Als Diffusionsdampfsperre dient ein mit Zinken versehener Mantel aus einem Material, bei dem sich durch Bördeln Sicken ausbilden lassen. Dieses Material steht axial über die Lagerschalen vor und überdeckt die angrenzenden Bereiche des Dämmaterials der übrigen Rohrleitung stirnseitig und untergreift die Dampfdiffusionssperre des Dämmaterials radial mit einer Abdichtung. Als Dämmaterial für die Rohrleitung wird Polyurethanschaum genannt. Die bekannte Anordnung ist hinsichtlich ihrer Herstellung und Montage relativ aufwendig.

Die der Erfindung zugrunde liegende Aufgabe besteht nun darin, ein DIN 4140 gerechtwerdendes Rohrisolierstück der eingangs genannten Art zu schaffen, dessen Herstellung und Montage vereinfacht sind.

Diese Aufgabe wird durch ein Rohrisolierstück der gattungsgemäßen Art gelöst, bei dem die Außenhaut aus Metallblech besteht und der Außenumfang des Ringsegments ein bis drei Viertel des Außenumfangs der zugehörigen Hohlzylinderhalbschale beträgt.

Das erfindungsgemäße Rohrisolierstück stellt einen dampfdichten und kältebrückenfreien Rohrträger dar, der im gesamten Kälte- und Klimabereich eingesetzt werden kann und den Vorschriften gemäß DIN 4140 genügt. Die Herstellung ist deshalb so einfach, weil eine zu verklebende, eine Dampfdiffusionssperre bildende Folie nicht mehr erforderlich ist, die in Umfangsrichtung und stirnseitig Überlappungen aufweist, welche ebenfalls dampfdicht verbunden werden müssen. Überlappungen des tragfähigen Mantels sind ebenfalls nicht erforderlich, da die nötigen Abdichtungen vom Isoliermaterial selbst übernommen werden, wofür einfache Verklebungen an den Teilungsflächen genügen. Bezüglich der Rohrleitung selbst kann eine Abschottungsverklebung vorgenommen werden, welche den Rohrträger zu einer dampfdiffusionsdichten Einheit werden läßt. Eine einfache Anschlußverklebung von entsprechenden Isoliermaterialien an den Stirnflächen des Rohrisolierstücks sorgt für eine dampfdiffusionsdichte Abdichtung der Rohrleitung insgesamt.

Dadurch daß der Außenumfang des Ringsegements ein Viertel bis drei Viertel des Außenumfangs der zugehörigen Hohlzylinderhalbschale beträgt, ist eine ausreichende Tragfähigkeit durch das Hartschaummaterial gewährleistet.

Die Seitenflächen jedes Ringsegments können bezogen auf den Hohlzylinder in radialen Ebenen liegen. Es ist jedoch auch möglich, daß die Seitenflächen jedes Ringsegments in Ebenen liegen, die zu einer durch die radial innenliegende Kante der Seitenfläche des Ringsegments gelegten Radialebene des Hohlzylinders nach beiden Seiten um bis zu 30° geneigt ist.

Wenn die innere Umfangsfläche des Ringsegments aus Hartschaum von einer Schicht aus elastischem Material, wie Gummi gebildet wird, läßt sich das Rohrisolierstück flexibel an verschiedene Rohrdurchmessertoleranzen anpassen. Ferner ergeben sich hohe Schalldämmeigenschaften.

Wenn die äußere Umfangsfläche des Ringsegments aus Hartschaum von einer Schicht aus elastischem Material, wie Gummi gebildet wird, hat das Rohrisolierstück hohe Schalldämmeigenschaften und verbessert die Gleitfähigkeit zwischen Rohrleitung und Isolierstück bei Ausdehnungen.

Die Außenhaut aus Metallblech kann als Rohrschelle mit einem Ansatz zum Anbringen der Aufhängung oder Abstützung ausgebildet sein.

Die dampfdichte Verbindung der ebenen rechteckigen Wandflächen der Hohlzylinderhalbschalen aus Weichschaum läßt sich dann einfach erreichen, wenn doppelseitig haftende Klebebänder verwendet werden.

Die Ringsegmente bestehen bevorzugt aus einem Polyurethan-Polyisozyanuratschaumstoff.

Anhand von Zeichnungen werden Ausführungsbeispiele der Erfindung näher erläutert. Es zeigt:
- Fig. 1: perspektivisch die beiden Hohlzylinderhalbschalen des Rohrisolierstücks bzw. Rohrträgers,
- Fig. 2: perspektivisch die beiden Hohlzylinderhalbschalen montiert um eine Rohrleitung herum mit einer Aufhängung,
- Fig. 3: einen Querschnitt durch das Rohrisolierstück von Fig. 2 im Tragbereich und
- Fig. 4: bis Fig. 7 im Querschnitt Modifizierungen der Ausgestaltung der Hohlzylinderhalbschalen im Tragbereich.

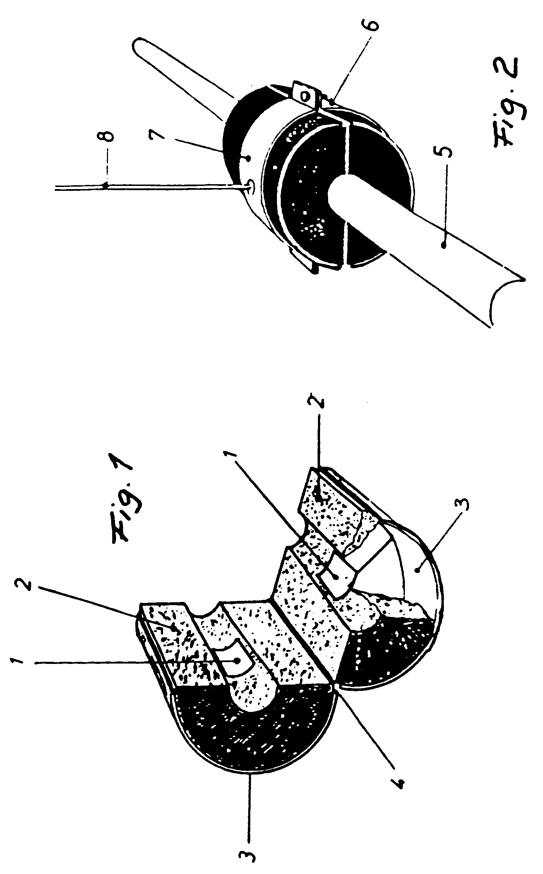

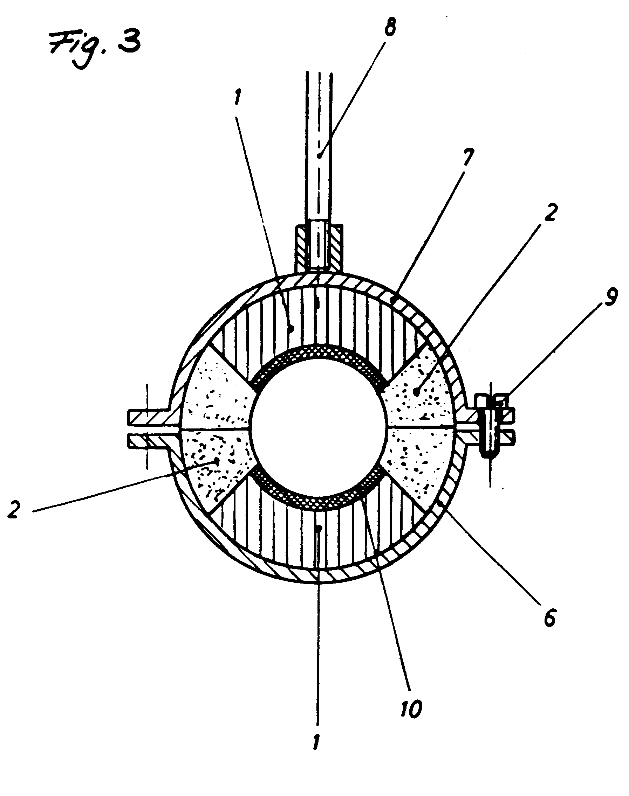

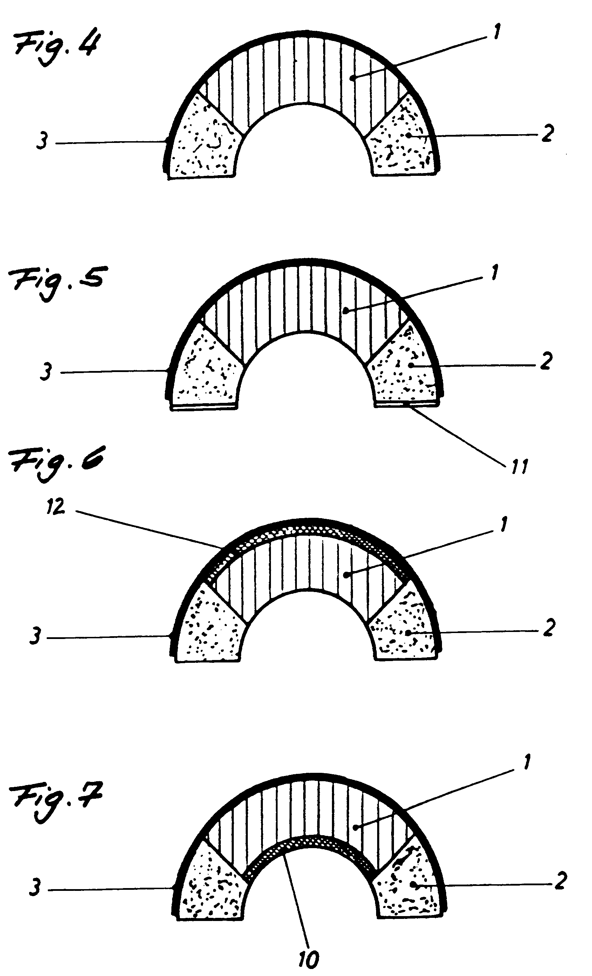

Das in Fig. 1 und 2 gezeigte Rohrisolierstück für eine Aufhängung oder Abstützung einer kälteisolierten Rohrleitung 5 besteht aus zwei Hohlzylinderhalbschalen 2 aus Weichschaum mit hohem Dampfdiffusionswiderstand, die auf ihrer äußeren Umfangsfläche mit einer Außenhaut 3 aus Metallblech versehen sind, das mit dem Weichschaum durch Verkleben dampfdicht verbunden ist. Die beiden Hohlzylinderhalbschalen 2 sind durch einen bei der Montage als Scharnier wirkenden Folienstreifen 4 verbunden.

In jede Hohlzylinderhalbschale 2 ist ein Ringsegment 1 aus tragfähigem, thermisch isolierenden Hartschaum eingesetzt, das sich bei der Ausgestaltung von Fig. 1, 4 und 5 von der Innenfläche, also der Kontaktfläche mit der Rohrleitung 5, bis zur Außenfläche, also der Kontaktfläche mit der Außenhaut 3, erstreckt. Jedes Ringsegement 1 ist so angeordnet, daß es sich symmetrisch zu einer durch die Hohlzylinderachse gehenden Ebene erstreckt, die zu der von den rechteckigen Wandflächen jeder Hohlzylinderhalbschale 2 gebildeten Ebene senkrecht ist. Die Seitenflächen und die axialen Stirnflächen jedes Ringsegments 1 sind dabei dampfdicht mit dem Weichschaum der Hohlzylinderhalbschalen 2 verbunden, was durch entsprechendes Ausschäumen oder durch Verkleben erreicht wird. Die aus einem unteren Schellenteil 6 und einem oberen Schellenteil 7 gebildete Rohrschelle mit einer Aufhängung 8 ist im Bereich der axialen Erstreckung der Ringsegmente 1 aus Hartschaum angeordnet, wie dies in Fig. 2 gezeigt ist.

Bei der Ausführungsform von Fig. 3 kann die Außenhaut direkt von dem unteren Schellenteil 6 und dem oberen Schellenteil 7 gebildet werden, die dann mit der äußeren Umfangsfläche der Hohlzylinderhalbschalen 2 dampfdicht verbunden sind und deren radiale Flansche durch Schraubenbolzen 9 miteinander verbindbar sind. Bei der in Fig. 3 und 7 gezeigten Ausgestaltung wird die rohrleitungsseitige Innenfläche der Ringsegmente 1 von einer Gummischicht 10 gebildet, die aufgrund ihrer Verformbarkeit eine Anpassung an Rohrdurchmessertoleranzen ermöglicht, wobei die Rohrleitung 5 sicher und fest in dem Rohrisolierstück gehalten ist und die Gummischicht 10 gleichzeitig zur Schalldämpfung beiträgt.

Bei der in Fig. 6 gezeigten Modifizierung des Rohrisolierstücks ist zwischen der äußeren Umfangsfläche des Ringsegments 1 und der inneren Umfangsfläche der Außenhaut 3 eine Gummischicht 12 angeordnet, die einerseits als Schalldämpfungskörper dient und andererseits die Gleitfähigkeit der Rohrleitung 5 bei Ausdehnungen begünstigt.

Bei der Modifizierung von Fig. 5 sind an den ebenen rechteckigen Wandflächen der einen Hohlzylinderhalbschale 2 Klebestreifen 11 befestigt, die nach Entfernen einer Abdeckschicht bei der Montage für eine dampfdichte Verbindung mit den zugeordneten Wandflächen der anderen Hohlzylinderhalbschale 2 dienen.

## Patentansprüche

1. Rohrisolierstück für eine Aufhängung oder Abstützung einer kälteisolierten Rohrleitung
- mit zwei Hohlzylinderhalbschalen (2) aus flexiblem, geschlossenzelligen, thermisch isolierenden Weichschaum mit hohem Wasserdampfdiffusionswiderstand, die längs ihrer ebenen rechteckigen Wandflächen miteinander zu einem die Rohrleitung (5) umschließenden Hohlzylinder dampfdicht verklebbar (11) sind,
- mit einem dampfdicht in jede Hohlzylinderhalbschale (2) eingesetzten Ringsegment (1) aus druckfestem, thermisch isolierenden Hartschaum, das sich im wesentlichen von der Innenfläche zur Außenfläche des Hohlzylinders symmetrisch zu einer durch die Hohlzylinderachse gehenden Ebene erstreckt, die zu der von den rechteckigen Wandflächen jeder Hohlzylinderhalbschale (2) gebildeten Ebene senkrecht ist,
- wobei die Seitenflächen und die axialen Stirnflächen jedes Ringsegments (1) dampfdicht mit dem Weichschaum der Hohlzylinderhalbschalen (2) verbunden sind, und
- mit einer Außenhaut (3; 6, 7), die mit der gesamten äußeren Umfangsfläche jeder Hohlzylinderhalbschale (2) dampfdicht verbunden ist,
- wobei die Aufhängung (8) oder Abstützung der axialen Erstreckung der Ringsegmente (1) aus Hartschaum zugeordnet ist,
dadurch gekennzeichnet, daß
- die Außenhaut (3; 6, 7) aus Metallblech besteht und daß der Außenumfang des Ringsegments (1) ein bis drei Viertel des Außenumfangs der zugehörigen Hohlzylinderhalbschale (2) beträgt.

2. Rohrisolierstück nach Anspruch 1, bei welchem die Seitenflächen jedes Ringsegments (1) bezogen auf den Hohlzylinder in radialen Ebenen liegen.

3. Rohrisolierstück nach Anspruch 1, bei welchem die Seitenflächen jedes Ringsegments (1) in Ebenen liegen, die zu einer durch die radial innenliegende Kante der Seitenfläche des Ringsegments (1) gelegten Radialebene des Hohlzylinders nach beiden Seiten um bis zu 30° geneigt sind.

4. Rohrisolierstück nach einem der vorhergehenden Ansprüche, bei welchem die innere Umfangsfläche des Ringsegments (1) aus Hartschaum von einer Schicht (10) aus elastischem Material, wie Gummi, gebildet wird.

5. Rohrisolierstück nach einem der vorhergehenden Ansprüche, bei welchem die äußere Umfangsfläche des Ringsegments (1) aus Hartschaum von einer Schicht (12) aus elastischem Material, wie Gummi, gebildet wird.

6. Rohrisolierstück nach einem der vorhergehenden Ansprüche, bei welchem die Außenhaut (3) aus Metallblech als Rohrschelle (6, 7) mit einem Ansatz zum Anbringen der Aufhängung (8) oder Abstützung ausgebildet ist.

7. Rohrisolierstück nach einem der vorhergehenden Ansprüche, bei welchem die ebenen rechteckigen Wandflächen der Hohlzylinderhalbschalen (2) aus Weichschaum durch doppelseitig haftende Klebebänder (11) dampfdicht miteinander verbindbar sind.

8. Rohrisolierstück nach einem der vorhergehenden Ansprüche, bei welchem die Ringsegmente (1) aus einem Polyurethan-Polyisocyanuratschaumstoff bestehen.

## Claims

1. Pipe insulation piece for a suspension element or supporting element of a pipeline insulated against cold, which pipe insulation piece has
- two hollow cylinder half-shells (2) of flexible, closed-cell, thermally insulating soft foam having a high resistance to water vapour diffusion, which half-shells can be adhesively joined (11) to one another along their planar rectangular wall surfaces in a vapour-tight manner to form a hollow cylinder that encloses the pipeline (5),
- an annular segment (1) of pressure-proof, thermally insulating rigid foam, inserted in a vapour-tight manner in each hollow cylinder half-shell (2) and extending substantially from the inner surface to the outer surface of the hollow cylinder symmetrically with respect to a plane running through the axis of the hollow cylinder, which plane is perpendicular to the plane formed by the rectangular wall surfaces of each hollow cylinder half-shell (2),
- the lateral surfaces and the axial end faces of each annular segment (1) being joined in a vapour-tight manner to the soft foam of the hollow cylinder half-shells (2), and
- an outer skin (3; 6, 7) which is joined in a vapour-tight manner to the entire outer circumferential surface of each hollow cylinder half-shell (2),
- the suspension element (8) or supporting element being assigned to the axial extent of the annular segments (1) of rigid foam,
characterised in that
- the outer skin (3; 6, 7) consists of sheet metal and the outer circumference of the annular segment (1) amounts to from one to three quarters of the outer circumference of the associated hollow cylinder half-shell (2).

2. Pipe insulation piece according to claim 1, in which the lateral surfaces of each annular segment (1) lie on radial planes with respect to the hollow cylinder.

3. Pipe insulation piece according to claim 1, in which the lateral surfaces of each annular segment (1) lie on planes that are, on both sides, at an oblique angle of up to 30° with respect to a radial plane of the hollow cylinder, which radial plane lies through the radially inner edge of the lateral surface of the annular segment (1).

4. Pipe insulation piece according to any one of the preceding claims, in which the inner circumferential surface of the annular segment (1) of rigid foam is formed by a layer (10) of resilient material, such as rubber.

5. Pipe insulation piece according to any one of the preceding claims, in which the outer circumferential surface of the annular segment (1) of rigid foam is formed by a layer (12) of resilient material, such as rubber.

6. Pipe insulation piece according to any one of the preceding claims, in which the outer skin (3) of sheet metal is constructed in the form of a pipe clamp (6, 7) having a means for attaching the suspension element (8) or supporting element.

7. Pipe insulation piece according to any one of the preceding claims, in which the planar rectangular wall surfaces of the hollow cylinder half-shells (2) of soft foam are arranged to be joined to one another in a vapour-tight manner by double-sided adhesive tapes (11).

8. Pipe insulation piece according to any one of the preceding claims, in which the annular segments (1) consist of a polyurethane polyisocyanurate foamed material.

## Revendications

1. Pièce d'isolation de tuyau pour la suspension ou le support d'une canalisation isolante contre le froid
- comprenant deux demi-coquilles (2) en forme de cylindre creux, faites dans une mousse cellulaire souple flexible, thermiquement isolante, à résistance élevée à la diffusion de la vapeur d'eau, qui peuvent être collées (11) l'une avec l'autre de manière étanche à la vapeur, le long des faces planes rectangulaires formant leurs parois, pour former un cylindre creux entourant la canalisation (5),
- comprenant un segment annulaire (1) fait dans une mousse dure résistante à la pression et thermiquement isolante, inséré de manière étanche à la vapeur dans chaque demi-coquille (2) en forme de cylindre creux, et qui s'étend sensiblement de la surface intérieure à la surface extérieure du cylindre creux, de manière symétrique par rapport à un plan qui passe par l'axe du cylindre creux et qui est perpendiculaire au plan formé par les faces rectangulaires formant les parois de chaque demi-coquille (2) en forme de cylindre creux,
- les faces latérales et les faces frontales axiales de chaque segment annulaire (1) étant reliées de manière étanche à la vapeur à la mousse souple des demi-coquilles (2) en forme de cylindre creux, et
- comprenant une peau extérieure (3; 6, 7) qui est reliée, de manière étanche à la vapeur, à la totalité de la surface circonférentielle externe de chaque demi-coquille (2) en forme de cylindre creux,
- la suspension (8) ou le support étant associés à l'étendue axiale des segments annulaires (1) en mousse dure,
caractérisé en ce que
- la peau extérieure (3 ; 6, 7) est formée par une tôle métallique et en ce que la circonférence externe du segment annulaire (1) mesure de un à trois quarts de la circonférence externe de la demi-coquille (2) en forme de cylindre creux correspondante.

2. Pièce d'isolation de tuyau selon la revendication 1, dans laquelle les faces latérales de chaque segment annulaire (1) sont situées dans des plans radiaux par rapport au cylindre creux.

3. Pièce d'isolation de tuyau selon la revendication 1, dans laquelle les faces latérales de chaque segment annulaire (1) se trouvent dans des plans qui ont une inclinaison allant jusqu'à 30° en direction des deux côtés, par rapport à un plan radial du cylindre creux passant par le bord de la face latérale du segment annulaire (1) situé à l'intérieur radialement.

4. Pièce d'isolation de tuyau selon l'une des revendications précédentes, dans laquelle la surface circonférentielle interne du segment annulaire (1) en mousse dure est formée par une couche (10) faite d'un matériau élastique, tel que du caoutchouc.

5. Pièce d'isolation de tuyau selon l'une des revendications précédentes, dans laquelle la surface circonférentielle externe du segment annulaire (1) en mousse dure est formée par une couche (12) faite d'un matériau élastique, tel que du caoutchouc.

6. Pièce d'isolation de tuyau selon l'une des revendications précédentes, dans laquelle la peau extérieure (3) en tôle métallique est formée comme un collier pour tuyaux (6, 7) pourvu d'une saillie pour ajouter la suspension (8) ou le support.

7. Pièce d'isolation de tuyau selon l'une des revendications précédentes, dans laquelle les faces planes rectangulaires formant les parois des demi-coquilles (2) en forme de cylindre creux en mousse souple peuvent être reliées l'une à l'autre de manière étanche à la vapeur au moyen de bandes adhésives (11) collant sur les deux côtés.

8. Pièce d'isolation de tuyau selon l'une des revendications précédentes, dans laquelle les segments annulaires (1) sont formés d'un produit alvéolaire de polyisocyanurate de polyuréthane.
